# EUROPEAN PATENT APPLICATION

(11) **EP 2 290 770 A2**
(43) Date of publication of application: **02.03.2011**
(21) Application number: 10173453.1
(22) Date of filing: 19.08.2010
(51) Int. Cl.: H02G 3/22

(54) **Lead-through block**

(30) Priority: 26.08.2009 PL 38888709
(71) Applicant: Alstom Technology Ltd, 5400 Baden (CH)
(72) Inventor: Waszkowski, Arkadiusz, 54-238, Wroclaw (PL); Ferens, Wojciech, 52-204, Wroclaw (PL); Pietruszewicz, Wladyslaw, 51-114, Wroclaw (PL)

(57) **Abstract**

The present invention concerns a lead-through plate for leading electric contacts and/or measurements of electric sensors out of an environment containing a gas, said lead-through plate comprising a plate essentially consisting of a synthetic polymer material.

## Description

### TECHNICAL FIELD

The present invention relates to a gas-tight lead-through block in particular for hydrogen-cooled generators.

### BACKGROUND OF THE INVENTION

Lead-through blocks are used for example for leading electric currents and/or signals out of a specific environment, e.g. from inside the slots of a stator cooled by H₂ and/or H₂O. A lead-through block must withstand high pressures and temperatures in order to fulfil a sealing function. Therefore, state of the art lead-through blocks usually are made of metal, preferably of steel, such as S235JR acc. to EN 10025-2. State of the art lead-through blocks usually have contact pins insulated by glass-ceramic only. This design is very sensitive and not repairable.

### SUMMARY OF THE INVENTION

One object of the present invention is therefore to overcome the disadvantages of lead-through plates according to the state of the art, i.e. to make them less sensitive and more easily repairable, while at the same time making them more simple and less expensive to manufacture.

The present invention solves the above problem by providing a lead-through plate for leading electric contacts (e.g. sensor signals and the like) out of an environment containing a gas, wherein the lead-through plate comprises a plate essentially consisting of a synthetic material.

The object of the present invention is therefore a product according to claim 1, and a use of the product according to claim 15.

The new lead-through block according to the invention has several advantages over state of the art lead-through blocks, e.g. concerning manufacturing and exchange. For instance, the engineering process of these plates is simple, allowing for casting or molding of the synthetic plastic material.

The lead-through plate according to the present invention may be used for leading electric signals of sensors measuring an electric signal inside a stator cooled by H₂ and/or H₂O The use of the lead-through plate according to the invention is for example advantageous for leading outside in an gas-tight manner signals of temperaturemeasurements carried out in the slots of a stator winding cooled by H₂ and/or H₂O However, other uses are also possible.

The lead-through plate preferably essentially consists of a polymer material, preferably a synthetic resin.

Preferably, the lead-through plate essentially consists of an epoxy resin.

A further preferred embodiment of the lead-through plate according to the invention is **characterized in that** the plate essentially consists of an at least partially reinforced, preferably of an at least partially fibre-reinforced material, the reinforcing fibres for example being glass fibres, carbon-fibres, etc. or a mixture of different types of fibres like glass fibre matting.

It can be advantageous if the plate comprises a coating and/or one or more fittings of a material different from the material of which the plate essentially consists. However, such a coating and/or fittings can alternatively also be of the same material as the plate material.

The plate preferably has a thickness of 20-50 mm. The width including contact pins extending from both the top and the bottom surface is preferably 60-80 mm. The diameter of the plate preferably lies in the range of 150-300 mm.

Preferably the lead-through plate further comprises a flange surrounding the circumference of the plate and contact pins, which preferably are screwed through the plate perpendicularly to a top surface and a bottom surface of the plate. To this end the plate is preferably provided with bores with internal threadings, into which the pins, which are provided with corresponding threadings, can be screwed.

A further preferred embodiment of a lead-through plate is thus **characterized in that** the contact pins are at least partially screwed into the plate. Such contact pins can be provided with a threaded middle portion flanked by two non-threaded portions, of which preferably a first non-threaded portion extends beyond the top surface of the plate and a second non-threaded portion extends beyond the bottom surface of the plate.

The contact pins preferably are at least partially made of brass, wherein at least the non-threaded portions preferably are coated, preferably with silver. The threaded portion of each contact pin preferably is sealed, preferably by anaerobic thread sealing.

The contact pins are preferably sealed by a single component adhesive, preferably containing acrylic and/or dimethacrylate esters. The adhesive is preferably at least partially applied in the threaded region of the bores of the plate.

For fixing and/or sealing the contact pins, various adhesives can be used..

Furthermore, the lead-through plate according to the invention is preferably gas-tight.

Further embodiments of the present invention are outlined in the dependent claims.

### SHORT DESCRIPTION OF THE FIGURES

In the accompanying drawings preferred embodiments of the invention are shown in which:
- Figure 1: is a schematic top view of a lead-through block according to a first embodiment of the invention;
- Figure 2: is a section along line A-A of Fig. 1.

### DETAILED DESCRIPTION OF THE PREFERRED EMBODIMENTS

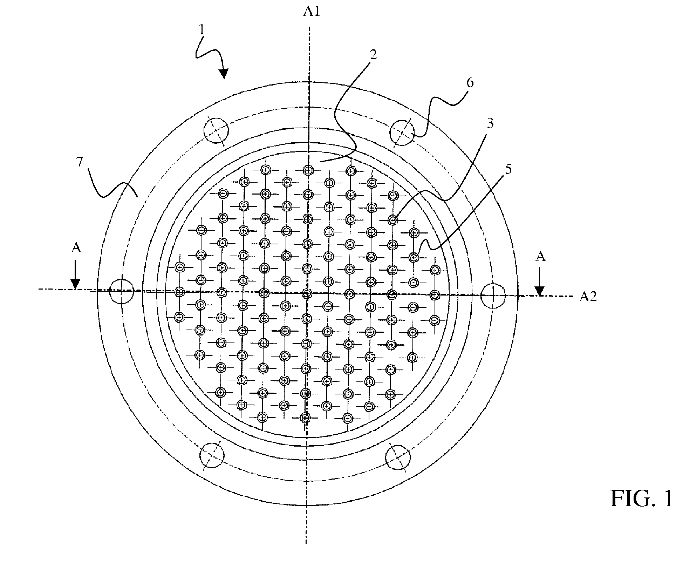

Referring to the drawings, which are for the purpose of illustrating the present preferred embodiments of the invention but are not for the purpose of limiting the same, figure 1 shows a lead-through block 1 according to a first embodiment of the present invention, in a schematic top view.

The lead-through block 1 has a plate 2 of an essentially circular form, surrounded at its circumference by an essentially ring-shaped flange 7. The flange 7 has several spaced cross holes 6 for fixing the lead-through block 1 to another device. The flange 7 is made as a part of plate 2. Plate 2 and flange 7 are made of a glass epoxy resin (eg. HM34).

In the depicted embodiment, the lead-through block 1 has six such recesses or through bores 6 of an essentially circular cross-section. The lead-through block 1 has a first axis A1, drawn vertically in figure 1, and a second axis A2, drawn horizontally in figure 1. The lead-through block 1 shown according to the embodiment of figure 1 has 13 rows of contact pins 3, said rows arranged parallel to or on the first axis A1, totalling in 109 contact pins, distributed in a specific scheme across the plate 2. In the depicted embodiment, eleven contact pins 3 are arranged in a spaced manner along the first axis A1, and seven contact pins 3 are arranged in a spaced manner along the second axis A2. In total, three rows parallel to or on the first axis A1 each have eleven contact pins 3, while four rows parallel to the first axis A1 each have ten contact pins 3, two rows parallel to the first axis A1 each have nine contact pins 3, two rows parallel to the first axis A1 each have six contact pins 3, and two rows parallel to the first axis A1 each have three contact pins 3. The contact pins 3 between two neighbouring rows are arranged in a staggered manner.

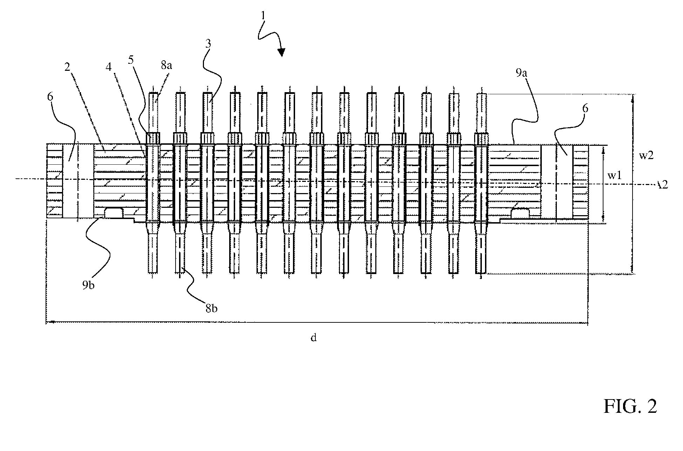

In the cut shown in figure 2 through the lead-through block 1 of figure 1, thirteen contact pins 13 each of a length of 80 mm are shown, spaced along the second axis A2, of which the distance between two neighbouring contact pins 3 along said axis A2 is equal and is in this case 14 mm. Each contact pin 3 penetrates the plate 2 essentially perpendicularly to the top surface 9a and the bottom surface 9b. Preferably equal lengths of each contact pin 3 extend above the top surface and the bottom surface of the plate 2. According the embodiment shown, the contact pins 3 each have a threaded portion 4. The length of portion 4 correlates with the thickness of plate 2, in this case it is about 35 mm, flanked by two non-threaded portions 8a, 8b, each of about 22 mm in length. The plate 2 itself is provided with through bores 6 with internal threadings to cooperate with these outer threadings of the pins. Alternatively the plate 2 may be provided with unthreaded bores and these may be fitted with inserts with internal threadings. The threaded portion 4 of the pins is screwed into the plate 2, more specifically into the internal threadings of the plate 2 or the fittings, and preferably extends across the entire width w1 of the plate 2. The contact pins 3 are made of silver plated brass, while the plate 2 is made of glass-epoxy material. The contact pins 3 are sealed by means of a material-specific adhesive, e.g. a glue. In figure 2 nuts are shown, which are used to fix the position of each contact pin 3 relative to the plate 2.

The depicted plate has a width w1 of about 35 mm. The width w2 including contact pins 3 extending from both the top surface 9a and the bottom surface 9b is about 80 mm, while the diameter d of the plate 2 is about 240 mm.

The lead-through blocks 1 according to the present invention showed to meet all technical requirements of existing lead-through blocks in H₂/H₂O-generators. Lead-through blocks 1 according to the present invention have successfully been tested in four H₂/H₂O -cooled generators, of which two were 560 MW-generators and two were 1000 MW-generators. Fifteen lead-through blocks were tested in total. No evidence of leakages was observed. All tested lead-through blocks met the operational requirements and showed an excellent performance. The destructive tests showed that the strength of the lead-through block itself is higher than that of the fixing screw. Because the lead-through blocks were deformed irregularly during high-pressure testing, it was necessary to apply one special common washer on all fixing screws to achieve equal thrust on the lead-through plate flange 7.

### LIST OF REFERENCE NUMERALS

- 1: lead-through block
- 2: plate
- 3: contact pin
- 4: threading of 3
- 5: flange of pins to screw
- 6: mounting holes
- 7: flange of 2
- 8a: upper non-threaded portion of 3
- 8b: lower non-threaded portion of 3
- 9a: top surface of 2
- 9b: bottom surface of 2

- A1: first axis
- A2: second axis
- d: diameter of 2
- w1: width of 2
- w2: width of 1, including 3

## Claims

1. A lead-through plate (1) for leading electric contacts and/or measurements of electric sensors out of an environment containing a gas, **characterized in that** the lead-through plate (1) comprises a plate (2) essentially consisting of a synthetic material.

2. Lead-through plate (1) of claim 1, **characterized in that** the plate (2) essentially consists of a polymer material, preferably a synthetic, optionally cross-linked, polymer material such as a resin, more preferably of a moulded synthetic resin.

3. Lead-through plate (1) according to claim 1 or 2, **characterized in that** the plate (2) essentially consists of an epoxy based polymer material.

4. Lead-through plate (1) according to one of the preceding claims, **characterized in that** the plate (2) essentially consists of an at least partially reinforced, preferably of an at least partially fibre-reinforced polymer material, wherein the reinforcement is preferably selected from fillers, glass fibres, carbon fibres, Aramid fibres, wherein the fibres preferably are of the high modulus type.

5. Lead-through plate (1) according to one of the preceding claims, **characterized in that** the plate (2) essentially consists of an epoxy resin.

6. Lead-through plate (1) according to one of the preceding claims, **characterized in that** the plate (2) comprises a coating and/or a fitting of the same or a material different from the material of which the plate (2) essentially consists.

7. Lead-through plate (1) according to one of the preceding claims, **characterized in that** the plate (2) has a thickness, preferably 20-50 mm, and wherein preferably the plate comprises through bores provided with internal threadings for the fixing of contact pins.

8. Lead-through plate (1) according to one of the preceding claims, **characterized in that** the lead-through plate further comprises a flange (7) surrounding the circumference of the plate (2), and contact pins (3) preferably screwed through the plate (2) perpendicularly to a top surface (9a) and a bottom surface (9b) of the plate (2),

9. Lead-through plate (1) according to one of the preceding claims, **characterized in that** the contact pins (3) are at least partially screwed into the plate, wherein the contact pins preferably are provided with a threaded middle portion (4) flanked by two non-threaded portions (8a, 8b), of which preferably a first non-threaded portion (8a) extends beyond the top surface (9a) of the plate (2) and a second non-threaded portion (8b) extends beyond the bottom surface (9b) of the plate (2).

10. Lead-through plate (1) according to claim 9, **characterized in that** the contact pins (3) are at least partially made of brass, wherein at least the non-threaded portions (8a, 8b) preferably are coated, preferably with silver, and **in that** the threaded portion (4) of each contact pin (3) preferably is sealed by anaerobic thread sealing.

11. Lead-through plate (1) according to one of claims 9 or 10, **characterized in that** the contact pins (3) are sealed by an adhesive.

12. Lead-through plate (1) according to claim 11, **characterized in that** the adhesive used for sealing the contact pins (3) is a single component adhesive, preferably containing acrylic and/or dimethacrylate esters, wherein preferably the adhesive at least partially is applied in a threaded region of the pins (3).

13. Lead-through plate (1) of one of the preceding claims, **characterized in that** the lead-through plate (1) is gas-tight.

14. Lead-through plate (1) of one of claims 9-13, **characterized in that** at the top surface (9a) of the plate (2) a nut (5) is provided on each contact pin (3).

15. Use of a lead-through plate (1) according to one of the preceding claims for leading electric signals of sensors measuring an electric signal, in a generator cooled by H₂ and/or H₂O.
